# EUROPEAN PATENT APPLICATION

(11) **EP 4 394 104 A1**
(43) Date of publication of application: **03.07.2024**
(21) Application number: 21955135.5
(22) Date of filing: 26.08.2021
(51) Int. Cl.: D06F 34/18, D06F 33/44, D06F 33/46, D06F 37/30, G01S 13/88

(54) **ARTIFICIAL INTELLIGENCE WASHING MACHINE AND CONTROL METHOD OF WASHING MACHINE**

(71) Applicant: LG Electronics Inc., Yeongdeungpo-gu Seoul 07336 (KR)
(72) Inventor: CHO, Sanghyeok, Seoul 06772 (KR); SONG, Seongsik, Seoul 06772 (KR); CHAE, Byungki, Seoul 06772 (KR); KIM, Sanggyu, Seoul 06772 (KR); KIM, Taehee, Seoul 06772 (KR)
(74) Representative: Schornack, Oliver
(86) International application number: PCT/KR2021/011461
(87) International publication number: WO 2023/027215

(57) **Abstract**

The present invention relates to a washing machine and a control method of the washing machine. A washing machine, according to one embodiment of the present invention, comprises: a water storage tank; a washing tank that accommodates laundry and is rotatably provided in the water storage tank; a motor that rotates the washing tank; a sensing unit that is formed to sense properties of the laundry accommodated in the washing tank; and a control unit that controls the motor to operate in any one washing mode from among a plurality of washing modes on the basis of the laundry property information sensed by the sensing unit.

## Description

### Technical Field

The present disclosure relates to a washing machine to which artificial intelligence is applied and a control method of the washing machine, and more specifically, to an artificial intelligence washing machine capable of selecting an optimized washing mode using millimeter waves, and a control method of the washing machine.

### Background Art

In general, a washing machine is generally a device that removes contaminants from cloth (hereinafter, referred to as *'*laundry*'*) such as clothing and bedding by using a chemical decomposition action of water and detergent and physical actions such as friction between water and laundry.

Washing machines are largely classified into agitator type, vortex type and drum type washing machines. Among these, the drum type washing machine includes a water storage tank (or tub) containing water, and a washing tank (or drum) rotatably disposed in the water storage tank to accommodate laundry.

The washing tank (or drum) has a plurality of holes through which water passes. A washing operation is usually divided into a washing stroke, a rinsing stroke, and a dehydration stroke. The progress of proceeding these strokes may be confirmed through a control panel (or display) disposed on the outside of the washing machine.

The washing stroke removes contaminants from laundry by friction between water stored in the water storage tank and the laundry stored in the washing tank, and a chemical action of detergent contained in water.

The rinsing stroke is to supply water, in which detergent is not dissolved, into the water storage tank to rinse the laundry. In particular, detergent absorbed (or attached) to the laundry during the washing stroke is removed. During the rinsing stroke, fabric softener is also supplied along with water.

The dehydration stroke is to dehydrate the cloth by spinning the washing tank at high speed after the rinsing stroke is completed. Typically, when the dehydration stroke is completed, all operations of the washing machine end. On the other hand, in the case of a washing machine with a dryer function, a drying stroke may be further performed after the dehydration stroke.

Normally, the washing operation is set to be performed under different conditions depending on an amount of laundry (hereinafter, referred to as *'*laundry amount*'*) put into the washing tank. For example, settings such as water level, washing intensity, draining time, and dehydration time may vary depending on the amount of laundry.

On the other hand, washing performance varies depending not only on the amount of laundry but also on a type of laundry. Therefore, if only the amount of laundry is considered when setting the washing operation, sufficient washing performance cannot be expected.

### Disclosure of Invention

### Technical Problem

To solve those problems mentioned above, an aspect of the present disclosure is to provide an artificial intelligence washing machine capable of analyzing properties of laundry in an optimized manner, and a control method of the washing machine.

Another aspect of the present disclosure is to provide an artificial intelligence washing machine capable of performing washing in an optimized washing mode in consideration of properties of laundry, and a control method of the washing machine.

The tasks to be solved in the present disclosure may not be limited to the aforementioned, and other problems to be solved by the present disclosure will be obviously understood by a person skilled in the art based on the following description.

### Solution to Problem

In order to achieve those aspects of the present disclosure, there is provided a washing machine according to an embodiment, the washing machine including a water storage tank; a washing tank that accommodates laundry therein and is rotatable within the water storage tank; a motor that rotates the washing tank; a sensing unit that senses properties of the laundry accommodated in the washing tank; and a control unit that controls the motor to operate in any one washing mode from among a plurality of washing modes based on information related to the properties of the laundry sensed by the sensing unit.

In an embodiment, the sensing unit senses the property of the laundry using millimeter waves.

In an embodiment, the control unit does not rotate the washing tank while sensing the properties of the laundry through the sensing unit.

In an embodiment, the sensing unit includes a transmitting antenna that outputs millimeter waves, and a receiving antenna that receives the output millimeter waves.

In an embodiment, the sensing unit includes a plurality of transmitting antennas and a plurality of receiving antennas.

In an embodiment, the sensing unit includes one transmitting antenna and a plurality of receiving antennas.

In an embodiment, the sensing unit implements beamforming using a plurality of transmitting antennas.

In an embodiment, the sensing unit performs the beamforming to scan the laundry present in the washing tank, and the control unit analyzes the properties of the laundry accommodated in the washing tank based on frequencies of the millimeter waves sensed by the sensing unit.

In an embodiment, the sensing unit transmits the millimeter waves output from the transmitting antenna through the laundry and receive the transmitted millimeter waves through the receiving antenna, and the control unit analyzes the properties of the laundry based on a change in frequency of the received millimeter waves.

In an embodiment, the washing machine further includes a reflector that reflects the millimeter waves output from the sensing unit, and the sensing unit and the reflector are disposed to face each other with the washing tank interposed therebetween.

In an embodiment, the sensing unit includes a plurality of sensor modules each including a transmitting antenna and a receiving antenna, the plurality of sensor modules include a first sensor module and a second sensor module, and the first sensor module and the second sensor module are disposed to face each other with the washing tank interposed therebetween.

In an embodiment, the control unit is configured to sense first information for determining the properties of the laundry accommodated in the washing tank through the sensing unit while rotating the washing tank for measuring a weight of the laundry present inside the washing tank, sense second information for determining the properties of the laundry accommodated in the washing tank through the sensing unit while not rotating the washing tank, and analyze the properties of the laundry based on the first information and the second information.

Details of other embodiments are included in the detailed description and drawings.

### Advantageous Effects of Invention

According to an embodiment of the present disclosure, one or more of the following advantages may be provided.

First, the present disclosure can analyze and determine properties of laundry using millimeter waves even without rotating a washing tank, thereby reducing time and power consumption required to determine the property.

Second, the present disclosure can provide an artificial intelligence washing machine that can perform optimized washing by performing washing in a washing mode optimized for determined properties of the laundry.

The effects of the present disclosure are not limited to those effects mentioned above, and other effects not mentioned may be clearly understood by those skilled in the art from the description of the appended claims.

### Brief Description of Drawings

FIG. 1 is a lateral sectional view illustrating a washing machine in accordance with one embodiment of the present disclosure.
FIG. 2 is a block diagram illustrating control relationship between components of the washing machine of FIG. 1.
FIGS. 3A, 3B, and 4 are conceptual views illustrating a sensing unit in accordance with one embodiment of the present disclosure.
FIG. 5 is a conceptual view illustrating beamforming implemented in the sensing unit according to the present disclosure.
FIGS. 6A, 6B, and 6C are diagrams illustrating frequency patterns according to types of laundry according to the present disclosure.
FIG. 7 is a flowchart illustrating a washing process in accordance with one embodiment of the present disclosure.

### Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. A suffix "module" or "unit" used for elements disclosed in the following description is merely intended for easy description of the specification, and the suffix itself is not intended to give any special meaning or function. In describing the embodiments disclosed herein, moreover, the detailed description will be omitted when specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, an element, a component, or a combination thereof disclosed in the specification, and it may also be understood that the existence or additional possibility of one or more other features, numbers, steps, elements, components, or combinations thereof are not excluded in advance.

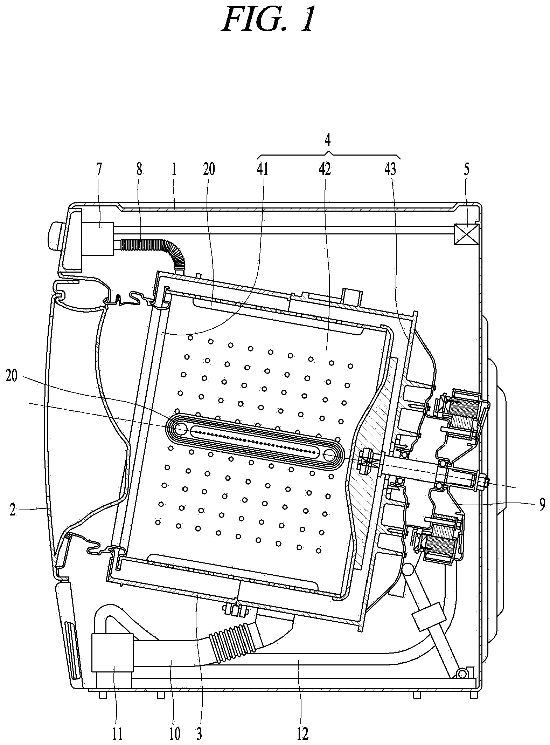

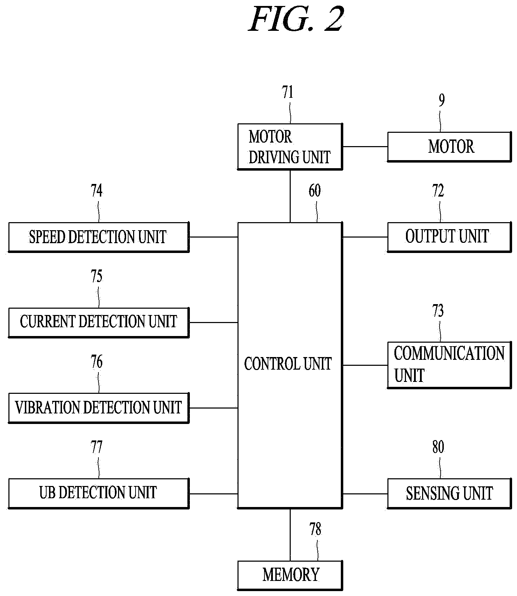

FIG. 1 is a lateral sectional view illustrating a washing machine in accordance with one embodiment of the present disclosure, and FIG. 2 is a block diagram illustrating control relationship between components of the washing machine of FIG. 1.

Referring to FIG. 1, a washing machine according to an embodiment of the present disclosure includes a casing 1 defining appearance, a water storage tank (or tub) 3 disposed in the casing 1 to store washing water, a washing tank 4 rotatably installed in the water storage tank 3 such that laundry is accommodated therein, and a motor 9 rotating the washing tank 4.

The washing tank 4 includes a front cover 41 with an opening through which the laundry is put into and taken out of the washing tank 4, a cylindrical drum 42 disposed approximately horizontally and having a front end coupled to the front cover 41, and a rear cover 43 coupled to a rear end of the drum 42. The motor 9 may have a rotational shaft that passes through a rear wall of the water storage tank 3 to be connected to the rear cover 43. A plurality of holes may be formed through the drum 42 to allow water to flow between the washing tank 4 and the water storage tank 3.

A lifter 20 may be disposed on an inner circumferential surface of the drum 42. The lifter 20 may protrude from the inner circumferential surface of the drum 42. The lifter 20 may extend long in a longitudinal direction (forward and backward directions) of the drum 42, and may be provided in plurality disposed to be spaced apart from one another in a circumferential direction. When the washing tank 4 rotates, the laundry may be lifted by the lifters 20.

The present disclosure is not necessarily limited to this, but a height at which the lifter 20 protrudes from the drum 42 may preferably be 30 mm (or 6.0 % of a drum diameter) or less, and more preferably 10 to 20 mm. In particular, when the height of the lifter 20 is 20 mm or less, the laundry may flow without sticking to the washing tank 4 even if the washing tank 4 is continuously rotated in one direction at approximately 80 rpm. That is, when the washing tank 4 is rotated in the one direction by more than one turn, the laundry located at the lowest side in the washing tank 4 rises to a predetermined height due to the rotation of the washing tank 4, and then falls by being separated from the washing tank 4.

The washing tank 4 is rotated around a horizontal axis. Here, the term "horizontal" does not refer to being geometrically horizontal in the strict sense, but as illustrated in FIG. 1, even when tilted at a predetermined angle to the horizon, it is closer to be horizontal than vertical, so it is assumed that the washing tank 4 is rotated centering on the horizontal axis.

A laundry insertion port is formed in a front surface of the casing 1, and a door 2 for opening and closing the laundry insertion port is rotatably disposed on the casing 1. A water supply valve 5, a water supply pipe 6, and a water supply hose 8 may be installed inside the casing 1. When the water supply valve 5 is open to supply water, washing water that has passed through the water supply pipe 6 may be mixed with detergent in a dispenser 7 and then supplied to the water storage tank 3 through the water supply hose 8.

An input port of a pump 11 is connected to the water storage tank 3 by an exhaust hose 10, and a discharge port of the pump 11 is connected to a drain pipe 12. Water exhausted from the water storage tank 3 through the exhaust hose 10 is pumped by the pump 11, flows along the drain pipe 12, and is then drained to the outside of the washing machine.

Referring to FIG. 2, the washing machine according to the embodiment of the present disclosure includes a control unit 60 that controls an overall operation of the washing machine, and a motor driving unit 71, an output unit 72, a communication unit 73, a speed detection unit 74, a current detection unit 75, a vibration detection unit 76, a UB detection unit 77, and a memory 78 that are controlled by the control unit 60.

The control unit 60 may control a series of washing processes including washing, rinsing, dehydration, and drying. The control unit 60 may perform the washing, rinsing, dehydration, and drying strokes according to a preset algorithm, and may also control the motor driving unit 71 according to the algorithm.

The motor driving unit 71 may control the driving of the motor 9 in response to a control signal applied from the control unit 60. The control signal may be a signal that controls a target speed, an acceleration slope (or acceleration), a driving time, etc. of the motor 9.

The motor driving unit 71 is for driving the motor 9 and may include an inverter (not illustrated) and an inverter control unit (not illustrated). Additionally, the motor driving unit 71 may be a concept that further includes a converter that supplies direct current (DC) power input to the inverter.

For example, when the inverter control unit (not illustrated) outputs a pulse width modulation (PWM) type switching control signal to the inverter (not illustrated), the inverter (not illustrated) may perform a high-speed switching operation to supply alternating current (AC) power of a predetermined frequency to the motor 9.

In this specification, explaining that the control unit 60 controls the motor 9 in a specific manner may mean that the control unit 60 applies a control signal to the motor driving unit 71 to control the motor 9 in a specific manner and the motor driving unit 71 controls the motor 9 in the specific manner based on the control signal. Here, the specific manner may include various embodiments described herein.

The speed detection unit 74 detects a rotational speed of the washing tank 4. The speed detection unit 74 may detect a rotational speed of a rotor of the motor 9. When a planetary gear train is provided to rotate the washing tank 4 by converting a rotation ratio of the motor 9, the rotational speed of the washing tank 4 may be a value obtained by converting the rotational speed of the rotor detected by the speed detection unit 74 by considering a deceleration or acceleration ratio of the planetary gear train.

The control unit 60 may control the motor driving unit 71 so that the motor 9 follows a preset target speed by feedbacking the rotational speed of the washing tank transmitted from the speed detection unit 74. In other words, the control unit 60 may control the motor 9 so that the rotational speed of the washing machine reaches the target speed.

The current detection unit 75 may detect current applied to the motor 9 (or output current flowing through the motor 9) and transmit the detected current to the control unit 60. The control unit 60 may detect an amount of laundry and an entangled degree of the laundry based on the received current.

At this time, the current values include values obtained in the process of accelerating the washing tank 4 toward a target speed (or the process of accelerating the motor 9 toward a preset target speed).

When the rotation of the motor 9 is controlled by vector control based on torque current and magnetic flux current, the current may be a torque axis (q-axis) component of a current flowing in a motor circuit, that is, a torque current (Iq).

The vibration detection unit 76 serves to detect vibration which is generated in the water storage tank 3 (or washing machine) due to the rotation of the washing tank 4 containing the laundry.

The washing machine according to the embodiment of the present disclosure may include a vibration sensor (or vibration measurement sensor). The vibration sensor may be disposed at one point of the washing machine, for example, on one point of the water storage tank 3. As an example, the vibration sensor may be included in the vibration detection unit 76.

The vibration detection unit 76 may receive a vibration value (or vibration signal) measured by the vibration sensor and transmit the received vibration value to the control unit 60. Additionally, the vibration detection unit 76 may calculate the vibration value (or vibration magnitude) of the water storage tank 3 (or washing machine) using the vibration signal measured by the vibration sensor.

Meanwhile, the washing machine according to the present disclosure may further include a UB detection unit 77. The UB detection unit 77 may detect eccentricity (shaking) of the washing tank 4, that is, unbalance (UB) of the washing tank 4. The UB detection unit 77 may calculate a UB value that numerically represents the shaking of the washing tank 4.

The UB detection unit 77 will be described in more detail below.

The speed detection unit 74, the current detection unit 75, the vibration detection unit 76, and the UB detection unit 77 provided in the washing machine according to the embodiment of the present disclosure may be named a sensing unit 80, and may be understood as a concept included in the sensing unit 80.

In addition, the sensing unit may measure (calculate) a plurality of types of data (signals, information) that include a rotational speed value (or speed value) of the washing tank 4 which is measured by the speed detection unit 74, a current value applied to the motor 9, which is measured by the current detection unit 75, a vibration value of the water storage tank 4 which is measured by the vibration detection unit 76, and an unbalance value (UB value) of the washing tank 4 which is measured by the UB detection unit 77.

The plurality of types of data may mean data related to the UB (unbalance) of the washing tank 4, data for measuring the UB of the washing tank 4, data generated by rotation of the washing tank 4, etc. The plurality of types of data may be used to control the washing tank 4 in the dehydration stroke.

For example, the plurality of types of data may be input as input values of an artificial neural network learned through machine learning, so as to be used for calculating an entangled degree of the laundry as an output value.

Meanwhile, in the drawing, the speed detection unit 74, the current detection unit 75, the vibration detection unit 76, and the UB detection unit 77 are shown as being provided separately from the control unit 60, but the present disclosure is not limited thereto.

At least one of the speed detection unit 74, the current detection unit 75, the vibration detection unit 76, and the UB detection unit 77 may be disposed within the control unit 60. In this case, the functions/operations/control methods performed by the speed detection unit 74, the current detection unit 75, the vibration detection unit 76, and the UB detection unit 77 may be performed by the control unit 60.

It will be understood that the vibration sensor is not included in the vibration detection unit 76 but disposed separately at one point of the washing machine when the vibration detection unit 76 is included in the control unit 60 or the vibration calculation is performed by the control unit 60.

The output unit 72 may output various information related to the washing machine. As an example, the output unit 72 may output an operating status of the washing machine. The output unit 72 may be an image (or video) output device such as an LCD or LED that outputs visual data, or an audio output device such as a speaker or buzzer that outputs sound.

The memory 78 may store a programmed artificial neural network, current patterns for an amount of laundry and/or an entangled degree of laundry, a database (DB) constructed through machine learning-based training based on the current patterns, a machine learning algorithm, current values detected by the current detection unit 75, an average value of those current values, a value obtained by processing the average value according to a parsing rule, data transmitted and received through the communication unit 73, and the like.

In addition, the memory 78 may store various control data for controlling the overall operation of the washing machine, washing setting data input by a user, data for washing time and washing course calculated according to the washing settings, data for determining whether an error has occurred in the washing machine, and the like.

The communication unit 73 may communicate with a server connected to a network. The communication unit 73 may be provided with one or more communication modules, such as an Internet module, a mobile communication module, and the like. The communication unit 73 may receive various data such as learning data, algorithm updates, and the like from the server.

The control unit 60 may update the memory 78 by processing various data received through the communication unit 73. For example, when data input through the communication unit 73 is update data associated with a driving program previously stored in the memory 78, the control unit 60 may update the memory 78 using the update data. Additionally, when input data is a new driving program, the control unit 60 may additionally store the new driving program in the memory 78.

Meanwhile, the present disclosure may determine properties of laundry in an optimized manner.

Hereinafter, a method for determining properties of laundry and a washing method utilizing the same according to the present disclosure will be described in more detail with reference to the attached drawings.

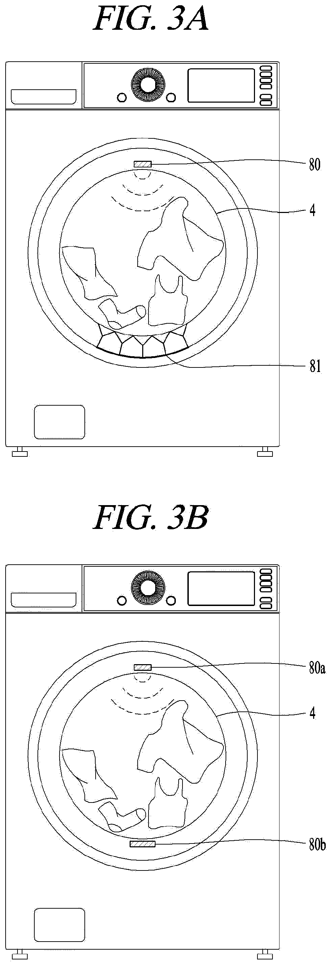

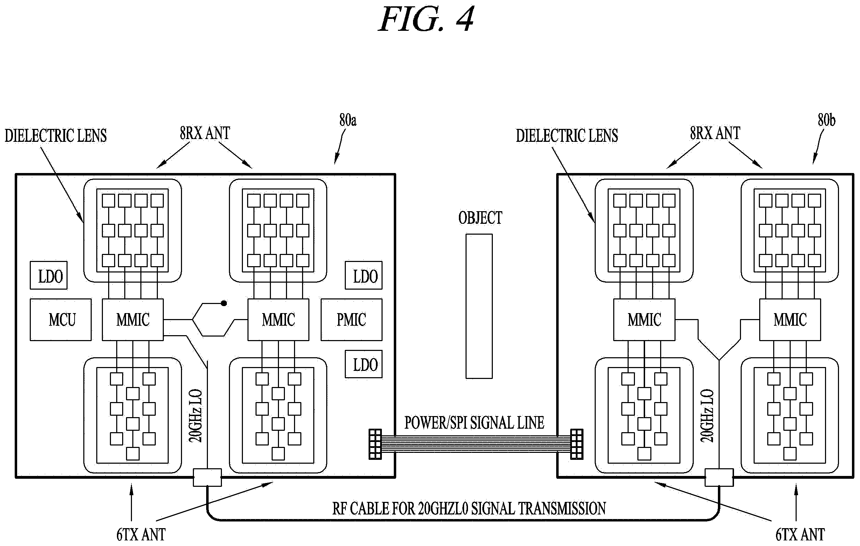

FIGS. 3A, 3B, and 4 are conceptual views illustrating a sensing unit in accordance with one embodiment of the present disclosure.

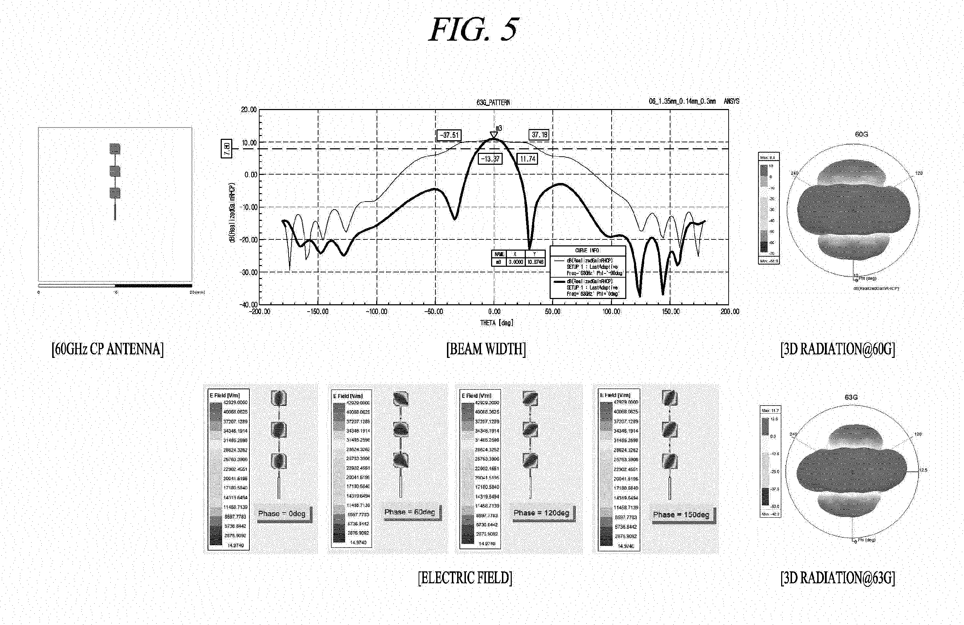

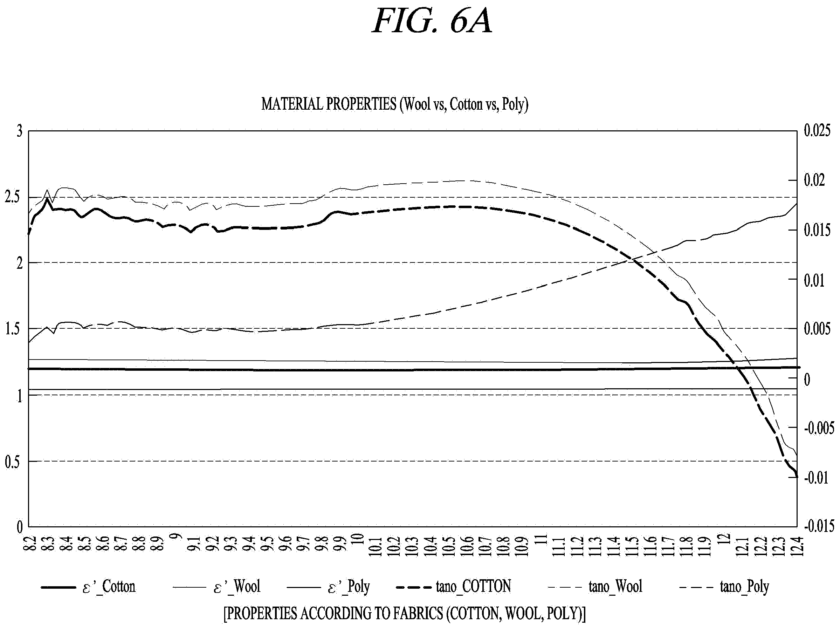

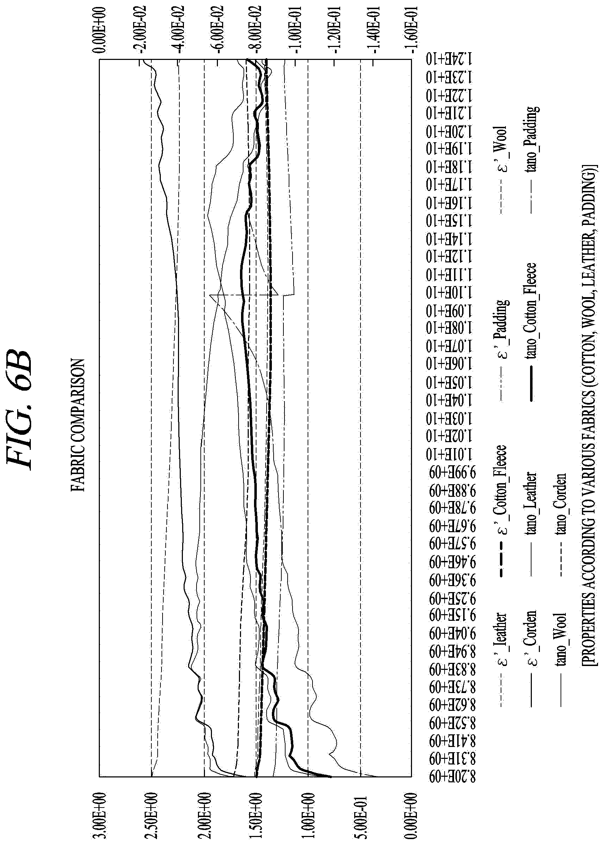

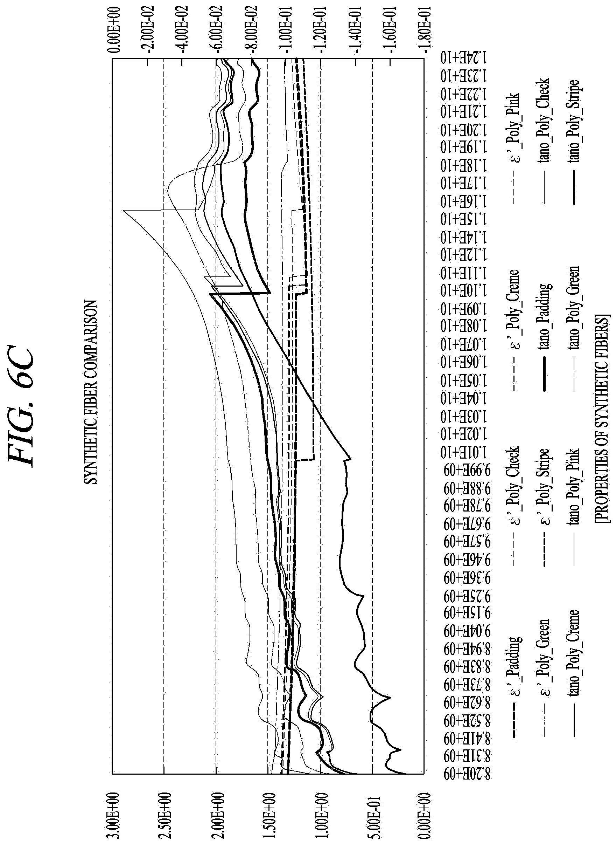

FIG. 5 is a conceptual view illustrating beamforming implemented in the sensing unit according to the present disclosure, and FIGS. 6A, 6B, and 6C are diagrams illustrating frequency patterns according to types of laundry according to the present disclosure.

The washing machine according to the embodiment of the present disclosure may include a sensing unit 80 that is configured to detect properties of laundry (or type, material, quality, etc. of laundry) stored in the washing tank 4.

The control unit 60 may control the motor to operate in any one washing mode from among a plurality of washing modes based on the property information regarding the laundry detected by the sensing unit 80.

The plurality of washing modes may include various washing modes such as standard mode, speed mode, wool washing mode, blanket washing mode, and the like.

Here, the properties of laundry may mean type, material, quality, etc. of the laundry, and when various types of laundry are present in the washing tank 4, may mean a type of each laundry, properties under assumption that the various types of laundry are considered as one type of laundry, and the like.

The properties are an abbreviation for physical properties, and refer to properties that are defined by quantifying mechanical, thermal, optical, electric, and magnetic properties of a material.

In other words, the property is a unique state of a material itself, and a material always exhibits the same property if the material is placed under the same external conditions.

As illustrated in FIG. 3A, at least one laundry may be present in the washing tank 4, and the properties (cotton, wool, silk, etc.) of each laundry may be different from each other.

The sensing unit 80 may sense properties of laundry contained in the washing tank 4.

At this time, the sensing unit 80 may sense the properties of the laundry using millimeter waves (mmWave).

Millimeter waves (mmWave) may refer to radio waves in a frequency range of 30 to 300 GHz. Millimeter waves may be radio waves with wavelengths of 1 to 10 millimeters (mm).

Millimeter waves have the property of passing through laundry.

That is, the millimeter waves output from the sensing unit 80 may pass through the laundry, and change in frequency as the millimeter waves pass through the laundry.

Accordingly, when sensing (analyzing) the properties of the laundry using millimeter waves, the control unit 60 may not rotate the washing tank 4 because the millimeter waves pass through the laundry.

That is, the control unit 60 may control the washing tank 4 not to rotate while sensing the properties of the laundry through the sensing unit 80.

The control unit 180 may perform a laundry property analysis using millimeter waves through the sensing unit 80, and this may mean confirming a type of laundry.

Referring to FIG. 4, the sensing unit 80a, 80b according to the present disclosure may include a transmitting antenna (TX Ant.) that outputs millimeter waves, and a receiving antenna (RX Ant.) that receives the output millimeter waves.

As illustrated in FIG. 4, the sensing unit 80a, 80b may be provided with a plurality of transmitting antennas (6TX Ant.) and a plurality of receiving antennas (8RX Ant.). In this way, the sensing unit 80 equipped with the plurality of transmitting antennas and the plurality of receiving antennas may be called a sensing unit 80 to which a MIMO (Multi Input, Multi Output) technology is applied.

On the other hand, although not illustrated, the sensing unit 80 may be provided with one transmitting antenna TX and a plurality of receiving antennas. In this case, a SIMO (Single Input, Multi Output) technology may be applied.

Meanwhile, the sensing unit 80 according to the present disclosure may implement beamforming using a plurality of transmitting antennas. Additionally, the sensing unit 80 may implement beamforming using a plurality of receiving antennas.

Beamforming refers to forming beams, and is a technology that aligns several antennas at predetermined intervals, produces antenna beams in a specific direction by changing amplitude and phase of signals supplied to each antenna, and transmits and receives the signals strongly in that direction.

Beamforming is a technology of transmitting and receiving signals strongly in a specific direction and weakly in another direction by modulating amplitude and phase of signals transmitted and received through each antenna in a state where several antennas are aligned to overlap several antenna patterns.

In other words, signals transmitted and received through several antennas operate like a single antenna, such as beams in a specific direction, so as to be strongly transmitted and received.

By transmitting and receiving the signals strongly in the specific direction through beamforming, cell coverage can be expanded and transmission speed can be improved.

In general, when beamforming is performed with N antennas, an antenna pattern of beams formed has N-times gain and a beam width is narrowed N times in a direction of the beams.

Therefore, as the number of antennas used for beamforming increases, beams with narrow beam width and high antenna gain are produced.

Beamforming may be applied to both transmission and reception, so there is transmit beamforming and receive beamforming. Depending on a method to be implemented, beamforming is classified into analog beamforming, digital beamforming, and hybrid beamforming.

The beamforming technology has been researched and developed starting from the second generation (2G) mobile communication with the concept of smart antenna. Initially, horizontal beamforming (or azimuth beamforming), in which an antenna array was made horizontal, was mainly considered. Afterwards, vertical beamforming (or elevation beamforming) and 3D beamforming, which produced beams both horizontally and vertically by horizontally and vertically arraying antennas in a 2D array form were researched and developed.

The beamforming technology is particularly important in 5G systems. In 5G, when using frequencies of high-frequency bands such as a millimeter wave (mmWave) band, cell coverage becomes much smaller than when using existing low-frequency bands. On the other hand, as the wavelength of radio waves becomes short, the size of each antenna and a distance between antennas may be reduced, allowing many antennas to be disposed at high density in the same area. Therefore, by applying the beamforming technology with the antennas in the 2D array form, coverage can be expanded and transmission speed can be improved.

The sensing unit 80 according to the present disclosure may implement beamforming using a plurality of transmitting antennas or a plurality of receiving antennas.

The sensing unit 80 according to the present disclosure may perform beamforming to scan laundry existing in the washing tank 4 through beamforming.

For example, the sensing unit 80 may perform beamforming for millimeter waves to scan the inner space of the washing tank sequentially through the plurality of transmitting antennas. In this case, the millimeter waves sequentially pass through the inner space of the washing tank. The millimeter waves passed through laundry existing within the washing tank may be received after being reflected by a reflector 81 or may be received by another sensing unit.

The sensing unit 80 may scan the inner space of the washing tank by performing beamforming for the millimeter waves to vary an output angle while having a narrow beam width.

For example, as illustrated in FIG. 5, the sensing unit 80 may perform beamforming by varying the phase of a transmitting antenna, varying a frequency, or changing the number of transmitting antennas.

The control unit 60 may analyze properties of laundry contained in the washing tank 4 based on frequencies of millimeter waves sensed by the sensing unit 80.

The sensing unit 80 may allow the millimeter waves output from the transmitting antenna to pass through the laundry and receive the passed millimeter waves through the receiving antenna.

As described above, analyzing the properties of laundry may include, for example, performing frequency property analyses in a plurality of frequency bands (e.g., 10GHz, 24Ghz, 60GHz), and may mean analyzing properties of laundry by measuring dielectric constant and transmittance for each frequency.

In addition, the control unit 60 may perform multiple property analyses using MIMO/SIMO technology, and through this, types of laundry mixed together may be confirmed.

That is, the control unit 60 may analyze the property of at least one type of laundry present in the inner area (or scan zone) of the washing tank using the beamforming technology of the sensing unit 80. Here, the control unit 60 may also use, as an example, dielectric constant and transmittance for each frequency.

As illustrated in FIGS. 6A to 6C, the control unit 60 may obtain patterns (or pattern changes) of millimeter wave frequencies according to fabrics (cotton, wool, poly) through the sensing unit 80, and determine properties (or types) of laundry existing inside the washing tank based on millimeter wave frequency pattern information for each fabric (or synthetic fiber) or pattern information related to millimeter wave frequencies when various fabrics exist.

The millimeter wave pattern information for each fabric and frequency pattern information (or frequency change information) when various fabrics exist may be stored in the memory 78.

The sensing unit 80 may receive the millimeter waves output from the transmitting antennas through the laundry to the receiving antennas, and the control unit 60 may analyze the properties of the laundry based on the change in frequency of the received millimeter waves.

As an example, the control unit 60 may compare a frequency change (or frequency pattern) corresponding to the frequency change (or frequency pattern) of the received millimeter waves with frequency pattern information stored in the memory 78, and determine the property (or type) of the laundry corresponding to the frequency change (or frequency pattern).

As illustrated in FIG. 3A, the washing machine according to the present disclosure may further include a reflector 81 that is configured to reflect millimeter waves output from the sensing unit 80.

At this time, the sensing unit 80 and the reflector 81 may be disposed to face each other with the washing tank 4 interposed therebetween, as illustrated in FIG. 3A.

Additionally, as illustrated in FIG. 4, the sensing unit 80 may include a plurality of sensor modules 80a and 80b including transmitting antennas and receiving antennas.

The plurality of sensor modules 80a and 80b may each include transmitting antennas (6TX Ant.) and receiving antennas (8TX Ant.).

The plurality of sensor modules may include a first sensor module 80a and a second sensor module 80b.

The first sensor module 80a and the second sensor module 80b may be disposed to face each other with the washing tank 4 interposed therebetween, as illustrated in FIG. 3B.

In this case, the millimeter waves output from the transmitting antennas of the first sensor module 80a may pass through the laundry present in the washing tank 4 and be received by the receiving antennas of the second sensor module 80b.

Additionally, the millimeter waves output from the transmitting antennas of the second sensor module 80b may pass through the laundry present in the washing tank 4 and be received by the receiving antennas of the first sensor module 80b.

The control unit 60 may determine (analyze, decide, sense) the properties (types) of the laundry present in the washing tank 4 while not rotating the washing tank 4 based on the frequency (or frequency pattern) which has changed while passing through the laundry.

Through this configuration, the present disclosure can provide a new control method that can determine (analyze, sense) the properties (types) of laundry using millimeter waves while not rotating the washing tank.

Meanwhile, the control unit 60 may rotate the washing tank 4 to measure the weight of laundry (e.g., laundry weight) present in the washing tank 4.

At this time, while rotating the washing tank to measure the weight of the laundry present in the washing tank, the control unit 60 may sense (measure) first information for determining the properties of the laundry contained in the washing tank through the sensing unit 80.

As an example, while rotating the washing tank 4, the control unit 60 may output millimeter waves to the laundry present in the washing tank through beamforming and receive the millimeter waves passed through the laundry to generate first information (e.g., frequency change, frequency patterns of the millimeter waves).

Additionally, the control unit 60 may sense second information for determining the properties of the laundry contained in the washing tank through the sensing unit while the washing tank is not rotated.

Likewise, in a state of not rotating the washing tank 4, the control unit 60 may output millimeter waves to the laundry present in the washing tank through beamforming and receive the millimeter waves passed through the laundry to generate second information (e.g., frequency change, frequency patterns of the millimeter waves).

Thereafter, the control unit 60 may analyze (determine) the properties of the laundry based on the first information and the second information.

Through this configuration, the present disclosure can analyze the properties of the laundry more accurately by considering both the first information acquired using the millimeter waves while rotating the washing tank and the second information acquired using the millimeter waves while not rotating the washing tank, even when the same laundry exists.

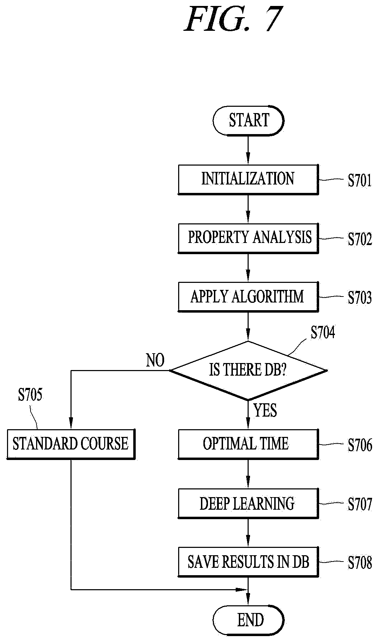

FIG. 7 is a flowchart illustrating a washing process in accordance with one embodiment of the present disclosure.

Referring to FIG. 7, the control unit 60 according to the present disclosure may perform initialization when the washing machine is powered on (S710), and perform a property analysis of laundry when a washing stroke request begins (S702).

To analyze the properties of the laundry, the contents of FIGS. 3 to 6 described above may be applied in the same/similar manner. As an example, the control unit 60 may use the sensing unit 80 that uses millimeter waves to determine the properties of the laundry present in the washing tank while not rotating the washing tank.

Thereafter, the control unit 60 may apply an algorithm to operate in one of a plurality of washing modes based on the properties of the laundry (S703).

When there is no washing mode corresponding to the determined properties of the laundry (S704), the control unit 80 may perform the washing stroke using a standard course (standard mode) (S705).

Meanwhile, when there is a washing mode corresponding to the determined property of the laundry (S704), the control unit 60 may determine one of the plurality of washing modes (S706).

Determining any one of the washing modes may mean determining a washing time (optimal time) optimized for the determined properties of the laundry.

Thereafter, the control unit 60 may perform deep learning using the optimal time for the properties of the laundry (S707) and store learning results in the memory (S708).

According to an embodiment of the present disclosure, one or more of the following effects may be obtained.

First, the present disclosure can analyze and determine properties of laundry using millimeter waves even without rotating a washing tank, thereby reducing time and power consumption required to determine the properties.

Second, the present disclosure can provide an artificial intelligence washing machine that can perform optimized washing by performing washing in a washing mode optimized for determined properties of laundry.

The effects of the present disclosure are not limited to those effects mentioned above, and other effects not mentioned may be clearly understood by those skilled in the art from the description of the appended claims.

The present disclosure can be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Therefore, the detailed description should not be limitedly construed in all of the aspects, and should be understood to be illustrative. The scope of the present disclosure should be determined by reasonable interpretation of the appended claims, and all changes within the equivalent scope of the present disclosure are embraced by the appended claims.

## Claims

1. A washing machine comprising:
a water storage tank;
a washing tank that accommodates laundry therein and is rotatable within the water storage tank;
a motor that rotates the washing tank;
a sensing unit that senses properties of the laundry accommodated in the washing tank; and
a control unit that controls the motor to operate in any one washing mode from among a plurality of washing modes based on information related to the properties of the laundry sensed by the sensing unit.

2. The washing machine of claim 1, wherein the sensing unit senses the properties of the laundry using millimeter waves.

3. The washing machine of claim 1, wherein the control unit does not rotate the washing tank while sensing the properties of the laundry through the sensing unit.

4. The washing machine of claim 1, wherein the sensing unit comprises:
a transmitting antenna that outputs millimeter waves; and
a receiving antenna that receives the output millimeter waves.

5. The washing machine of claim 4, wherein the sensing unit comprises a plurality of transmitting antennas and a plurality of receiving antennas.

6. The washing machine of claim 4, wherein the sensing unit comprises one transmitting antenna and a plurality of receiving antennas.

7. The washing machine of claim 4, wherein the sensing unit implements beamforming using a plurality of transmitting antennas.

8. The washing machine of claim 7, wherein the sensing unit performs the beamforming to scan the laundry present in the washing tank, and
the control unit analyzes the properties of the laundry accommodated in the washing tank based on frequencies of the millimeter waves sensed by the sensing unit.

9. The washing machine of claim 8, wherein the sensing unit transmits the millimeter waves output from the transmitting antenna through the laundry and receive the transmitted millimeter waves through the receiving antenna, and
the control unit analyzes the properties of the laundry based on a change in frequency of the received millimeter waves.

10. The washing machine of claim 1, further comprising a reflector that reflects the millimeter waves output from the sensing unit,
wherein the sensing unit and the reflector are disposed to face each other with the washing tank interposed therebetween.

11. The washing machine of claim 1, wherein the sensing unit comprises a plurality of sensor modules each including a transmitting antenna and a receiving antenna,
the plurality of sensor modules include a first sensor module and a second sensor module, and
the first sensor module and the second sensor module are disposed to face each other with the washing tank interposed therebetween.

12. The washing machine of claim 1, wherein the control unit is configured to,
sense first information for determining the properties of the laundry accommodated in the washing tank through the sensing unit while rotating the washing tank for measuring a weight of the laundry present inside the washing tank,
sense second information for determining the properties of the laundry accommodated in the washing tank through the sensing unit while not rotating the washing tank, and
analyze the properties of the laundry based on the first information and the second information.
